# EUROPÄISCHE PATENTSCHRIFT

(11) **EP 2 233 552 B1**
(45) Veröffentlichungstag und Bekanntmachung des Hinweises auf die Patenterteilung: **04.01.2012**
(21) Anmeldenummer: 10156182.7
(22) Anmeldetag: 11.03.2010
(51) Int. Cl.: C10L 1/182, C10L 1/02, C10L 1/185

(54) **Dieselkraftstoff auf Ethanol-Basis**
Diesel fuel on an ethanol basis
Carburant diesel à base d'éthanol

(30) Priorität: 27.03.2009 DE 102009015347
(43) Veröffentlichungstag der Anmeldung: 29.09.2010
(73) Patentinhaber: MAN Truck & Bus AG, 80995 München (DE)
(72) Erfinder: Jacob, Eberhard, 82152, Krailling (DE)
(74) Vertreter: Held, Stephan

(56) Entgegenhaltungen:
- WO-A1-81/00721
- WO-A1-2008/124800
- GB-A- 2 143 846

## Beschreibung

Die Erfindung betrifft einen Dieselkraftstoff auf Ethanol-Basis.

Ethanol wird zunehmend als Kraftstoff für Otto-Motoren eingesetzt. Der heutzutage in Brasilin eingesetzte Otto-Kraftstoff ist eine Mischung aus Ethanol und Benzin in unterschiedlichen Verhältnissen. E85, der zu 85% aus absolutem Ethanol und zu 25% aus Benzin besteht, ist in Schweden seit Jahren erhältlich.

Für Diesel-Motoren ist ein Kraftstoff auf Ethanol-Basis bisher jedoch insbesondere aus zwei Gründen nicht geeignet. Erstens ist die Selbstzündung mit einem erheblicher Zündverzug verbunden, was eine Folge davon ist, dass die Cetanzahl von Ethanol lediglich etwa 8 beträgt, während für geeignete Dieselkraftstoffe Cetanzahlen von größer 30 erforderlich sind. Ferner ist die Brenngeschwindigkeit nach der Zündung wesentlich geringer als bei üblichen Dieselkraftstoffen, was zu Wirkungsgradverlusten führt.

Es ist bekannt, zur Verbesserung der Selbstzündung das Kompressionsverhältnis des Dieselmotors von etwa 17 bis 18 auf etwa 28 zu erhöhen. Diese motorische Lösung, bei der es zu einer Erhöhung der Endtemperatur kommt, wurde von der Firma Scania in Schweden gewählt. Sie führt jedoch zu einer erhöhten mechanischen Beanspruchung des Motors, die letztendlich nur durch eine Leistungsreduzierung vermieden werden kann. Hinzu kommt, dass dem E85 ein Zündbeschleuniger auf Basis von hochmolekularen, nicht-flüchtigen Polyethylenglycolderivaten in einer Menge von etwa 3 bis 7 % (V/V) zugesetzt werden muss. Dieser Dieselkraftstoff ist unter dem Namen Etamax D im Handel. Die Verwendung von Etamax D führt jedoch aufgrund des Zusatzes der Polyethylenglycolderivate zu unerwünschten Partikelemissionen (SAE 2004-01-1987).

Auch die Verwendung von Glycerinethoxylat als Zündbeschleuniger nach der US 5,628,805 hat sich hinsichtlich der Partikelemissionen als nachteilig erwiesen.

In der EP 0 403 516 wird ein Dieselkraftstoff auf Ethanol-Basis beschrieben, der Polyalkylenglycol-Verbindungen als Zündverbesserer enthält. Dieser Kraftstoff ist jedoch wirkungsarm und führt auch zu unerwünschten Partikelemissionen.

Die WO 81/00721 A1 beschreibt einen Kraftstoff, der in einem Dieselmotor verwendet werden kann, und der auf 65 bzw. 71% Ethanol, 13 bzw. 1% Pflanzenöl als Verbrennungsbeschleuniger sowie 13 bzw. 28% Diethylether basiert.

Die GB 2 143 846 offenbart einen Dieselkraftstoff, bestehend aus 85% oder mehr Ethanol sowie einem Verbrennungsbeschleuniger.

Der Erfindung liegt die Aufgabe zugrunde, obige Nachteile, insbesondere die Partikelemissionen, zu vermeiden und einen Dieselkraftstoff auf Ethanol-Basis bereitzustellen, der in üblichen Dieselmotoren zur Anwendung kommen kann.

Diese Aufgabe wird durch einen Dieselkraftstoff auf Ethanol-Basis gelöst, der 60 bis 80 Volumen-% Ethanol, 2,5 bis 15 Volumen-% eines linearen Dialkylethers mit einer Kettenlänge einschließlich des Sauerstoffatoms von 10 bis 40 sowie Gemischen davon, und 15 bis 25 Volumen-% Verbrennungsbeschleuniger, wobei der Verbrennungsbeschleuniger ein FAME nach DIN EN 14214 (2004) ist, umfasst.

Dem Ethanol wird demnach ein oder mehrere lineare(r) Dialkylether als Zündbeschleuniger zugesetzt, der (die) im Wesentlichen ohne Partikelemissionen verbrennt(en). Es können lediglich Partikel aus unverbrannten organischen Verbindungen, die am Oxidationskatalysator beseitigt werden können, entstehen. Die Partikelemissionen des erfindungsgemäßen Dieselkraftstoffes liegen unter etwa 5 mg/kWh in den Testzyklen, vorzugsweise unter etwa 2 mg/kWh in den Testzyklen (ESC, ETC, WHDC (dieselnet.com)). Der erfindungsgemäße Dieselkraftstoff zündet auch bei Kompressionsverhältnissen von unter 21 von selbst. Der erfindungsgemäße Dieselkraftstoff kann in üblichen Dieselmotoren eingesetzt werden und zeichnet sich durch einen niedrigen Zündverzug, eine hohe Verbrennungsgeschwindigkeit sowie einen hohen Brennwert aus. Vorzugsweise liegt der Zündverzug nicht über 9 ms, besonders bevorzugt nicht über 8,5 ms und ganz besonders bevorzugt nicht über 8,0 ms. Darüber hinaus führt der Einsatz eines oder mehrerer Dialkylether dazu, dass auf ein Vergällungsmittel verzichtet werden kann. Der erfindungsgemäße Dieselkraftstoff ist ein hochwertiger Dieselkraftstoff auf biogener Basis.

Der lineare Dialkylether liegt in einer Menge von 2,5 bis 15 Volumen-%, bevorzugt in einer Menge von 2,5 bis 10 Volumen% und besonders bevorzugt in einer Menge von 2,5 bis 5 Volumen-%, vor. Da der Dialkylether die teuerste der im erfindungsgemäßen Dieselkraftstoff enthaltenen Komponenten ist, ist es von Vorteil, diesen in einer möglichst geringen Menge einzusetzen.

Die im erfindungsgemäßen Dieselkraftstoff eingesetzten linearen Dialkylether besitzen eine Kettenlänge von etwa 10 bis etwa 40. Bei der Zählung der Kettenlänge wird das Sauerstoffatom mitgezählt. Bevorzugt beträgt die Kettenlänge etwa 10 bis etwa 30 und besonders bevorzugt etwa 17 bis etwa 25. Insbesondere geeignet sind Dihexylether, Diheptylether, Dioctylether, Dinonylether, Didecylether, Diundecylether, Dilaurylether und Dimyristylether. Besonders geeignet sind Dioctylether, Didecylether und Dilaurylether, da sie am kostengünstigsten herzustellen sind.

Vorzugsweise weist der lineare Dialkylether nur eine Etherbindung auf.

Ferner ist es bevorzugt, dass der lineare Dialkylether frei von Alkoholgruppen ist.

Die linearen Dialkylether sind vorzugsweise überwiegend geradkettig, das bedeutet höchstens gering verzweigt, d.h. enthalten nur bis zu drei, vorzugsweise bis zu zwei C₁-C₄-Alkylgruppen.

Die eingesetzten Dialkylether dienen vorzugsweise als Lösungsvermittler zwischen Ethanol und dem Verbrennungsbeschleuniger, falls letzterer eingesetzt wird. Vorteilhafterweise ist eine Mischbarkeit auch noch bei -20°C gegeben.

Ethanol (absolut) wird in einer Menge von 60 bis 80 Volumen-%, insbesondere in einer Menge von 70 bis 80 % Volumen.% eingesetzt.

Der Verbrennungsbeschleuniger liegt in einer Menge von 15 bis 25 Volumen -%, vorzugsweise in einer Menge von 15 bis etwa 20 % Volumenprozent vor. Dies hat den Vorteil, dass, unter Beibehaltung der gewünschten Eigenschaften, der Gehalt des teueren Dialkylethers gesenkt werden kann.

Der Verbrennungsbeschleuniger hat die Aufgabe, die Brenngeschwindigkeit nach der Zündung zu erhöhen. Der Verbrennungsbeschleuniger erhöht zusätzlich den Brennwert des Kraftstoffes.

Insbesondere umfasst der erfindungsgemäße Dieselkraftstoff auf Ethanol-Basis 65 bis 75 Volumen-% Ethanol, 2,5 bis 12,5 % Volumen-% linearen Dialkylether und 17,5 bis 22,5 Volumen-% Verbrennungsbeschleuniger.

In einer ganz bevorzugten Ausführungsform umfasst der erfindungsgemäße Dieselkraftstoff auf Ethanol-Basis etwa 75 Volumen-% Ethanol, etwa 5 Volumen-% linearen Dialkylether und etwa 20 % (Volumen-%) Verbrennungsbeschleuniger.

### Beispiel 1 (Vergleichsbeispiel)

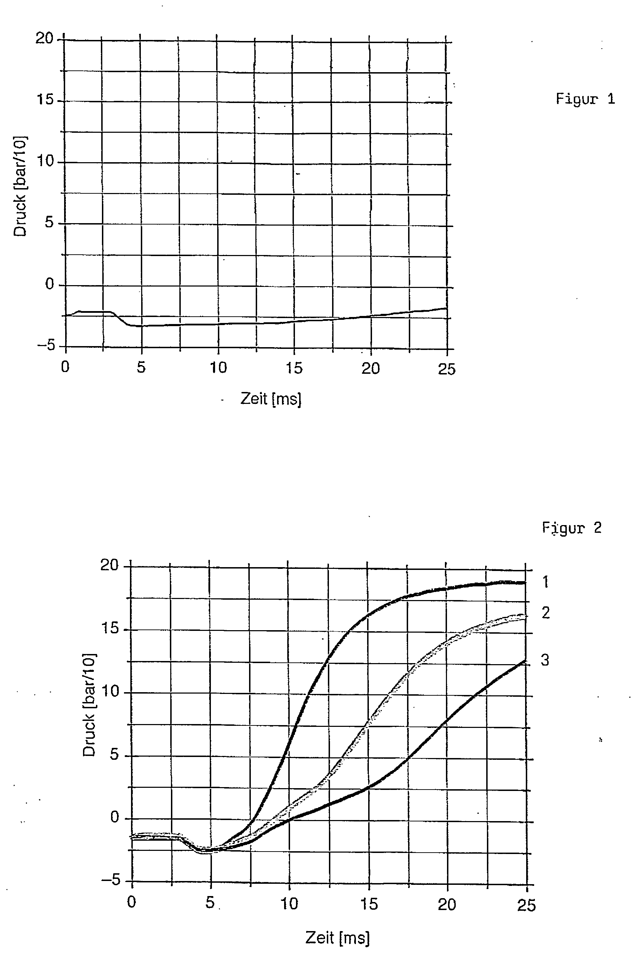

Der Zündverzug sowie die Verbrennungsgeschwindigkeit wurde von handelsüblichen Etamax D mit einem Advanced Fuel Ignition Delay Analyzer (AFIDA) der Firma ASG, Neusäß (US 2007/0083319) gemessen (sh. Figur 1). Der Einspritzdruck betrug 800 bar, die Kammertemperatur 600°C, der Kammerdruck 50 bar, die Einspritzdauer 600 ms und die Einspritzmenge 22 mg.

Der Zündverzug lag über 25 ms, d.h. es kam zu keiner Zündung.

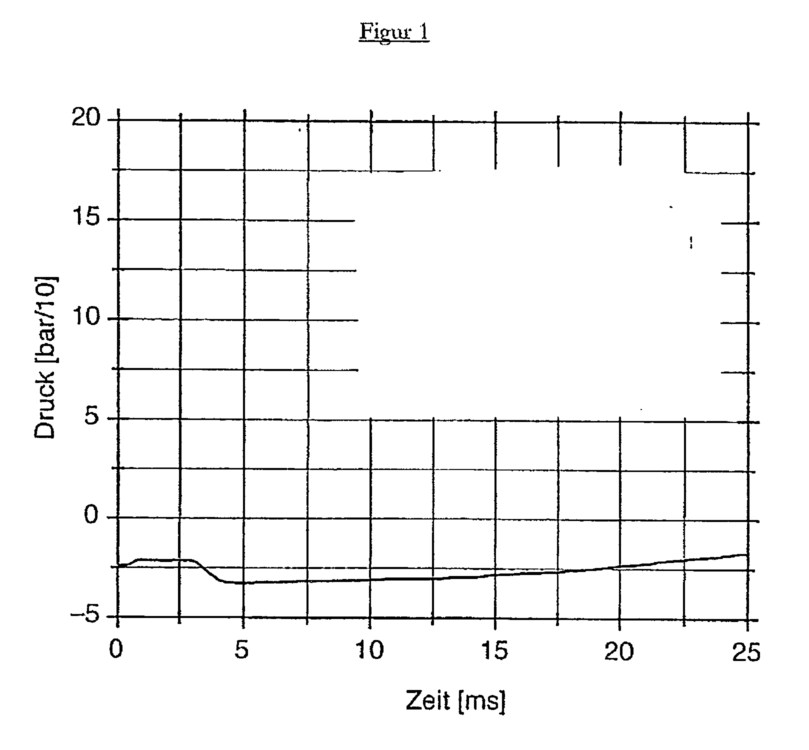

### Beispiel 2

Die nachstehend angegebenen erfindungsgemäßen Dieselkraftstoffe auf Ethanol-Basis wurden analog Beispiel 1 getestet (Figur 2).

**Tabelle 1**

| Nr. | Ethanol (absolut) [%(V/V)] | Dialkylether [%(V/V)] | Verbrennungsbeschleuniger [%(V/V)] | Zündverzug [ms] |
|---|---|---|---|---|
| 1 | 70 | Dioctylether 10 | Palmöl-Methylester 20 | 7,5 |
| 2 | 70 | Didecylether 10 | Sojaöl-Methylester 20 | 7,8 |
| 3 | 75 | Dilaurylether 5 | Sojaöl-Methylester 20 | 7,8 |

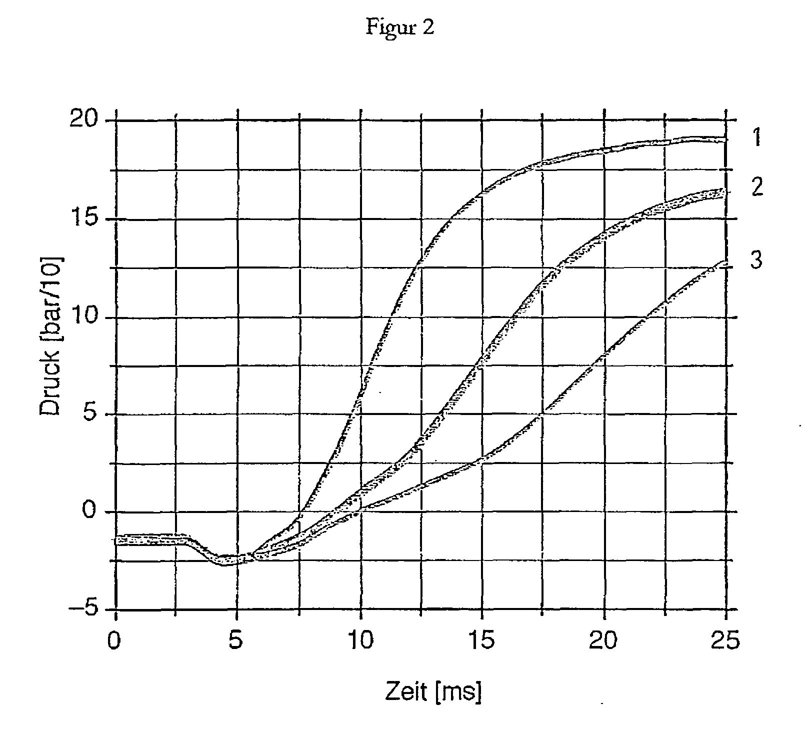

Gegenüber dem Stand der Technik (Etamax D) ist der Zündverzug erniedrigt (Etamax D > 25 ms). Hinzu kommt, dass die Brenngeschwindigkeit deutlich erhöht ist.

### Beispiel 3

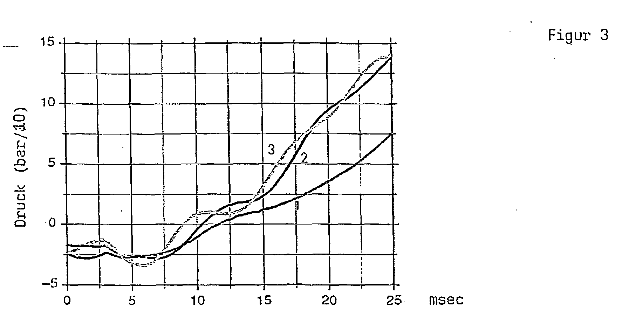

Die nachstehend angegebenen erfindungsgemäßen Dieselkraftstoffe auf Ethanol-Basis wurden analog Beispiel 1 getestet (Figur 3).

**Tabelle 2**

| Nr. | Ethanol (absolut) [% (V/V)] | Dialkylether [%(V/V)] | Verbrennungsbeschleuniger [%(V/V)] | Zündverzug [ms] |
|---|---|---|---|---|
| 1 | 70 | Dioctylether 10 | Rapsöl-Methylester 20 | 7,5 |
| 2 | 70 | Didecylether 10 | Rapsöl-Methylester 20 | 7,8 |
| 3 | 70 | Dilaurylether 10 | Rapsöl-Methylester 20 | 7,8 |

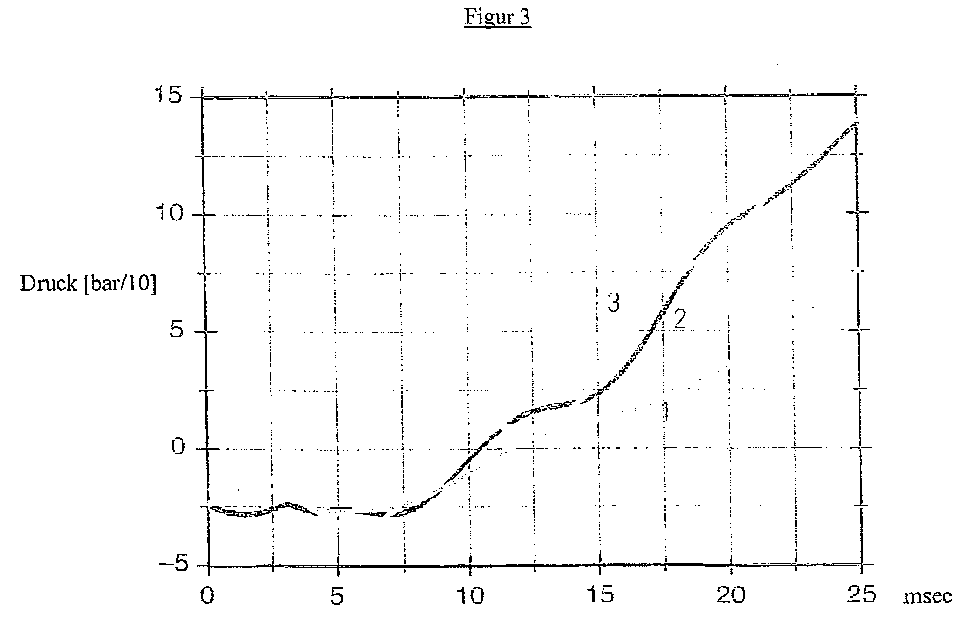

Gegenüber dem Stand der Technik (Etamax D) ist der Zündverzug erniedrigt (Etamax D > 25 ms). Hinzu kommt, dass die Brenngeschwindigkeit deutlich erhöht ist. Die Druckanstiege und damit die Brenngeschwindigkeit sind bei Einsatz von Didecylether (2) und Dilaurylether (3) höher im Vergleich zum Dioctylether (1).

### Beispiel 4

Analog Beispiel 1 wurden Messungen an Ethanol-Additivmischungen mit 70 % (V/V) Ethanol und 30 % (V/V) Ether durchgeführt. Dabei wurden folgende Zündverzüge ermittelt:

| | | |
|---|---|---|
| Dibutylether | > | 15 ms |
| Dihexylether | | 8,5 ms |
| Dioctylether | | 7,9 ms |
| Ethylenglycoldiethylether | > | 15 ms |
| Formaldehyddiethylaceral, 99,7% | > | 15 ms |
| Tetrahydropyran anhydrous, 99% | > | 15 ms |
| Dimethoxymethan, 98% | > | 15 ms |
| n-Butylethylethrer, 99% | > | 15 ms |
| .Butylethylether, 99% | > | 15 ms |
| Di-tert-butylperoxid [2 %ig] | > | 15 ms |
| Decanol | | 12,5 ms |
| THF | > | 15 ms |

Dieses Beispiel zeigt, dass gegebenfalls auf den Verbrennungsbeschleuniger ganz verzichtet werden kann.

## Patentansprüche

1. Dieselkraftstoff auf Ethanol-Basis, umfassend 60 bis 80 Volumen-% Ethanol, 2,5 bis 15 Volumen-% eines linearen Dialkylethers mit einer Kettenlänge einschließlich des Sauerstoffatoms von 10 bis 40 sowie Gemischen davon, und 15 bis 25 Volumen-% Verbrennungsbeschleuniger, wobei der Verbrennungsbeschleuniger ein FAME nach DIN EN 14214 (2004) ist.

2. Dieselkraftstoff nach Anspruch 1, **dadurch gekennzeichnet, dass** der lineare Dialkylether in einer Menge von bis zu 10 Volumen-%, vorzugsweise in einer Menge von bis zu 5 Volumen-% vorliegt.

3. Dieselkraftstoff nach einem der vorangegangenen Ansprüche, **dadurch gekennzeichnet, dass** der Verbrennungsbeschleuniger in einer Menge von 15 bis 20 Volumen-%, vorliegt.

4. Dieselkraftstoff nach Anspruch 3, **dadurch gekennzeichnet, dass** der FAME nach DIN EN 14214 (2004) ein Rapsöl-Methylester, ein Sojaöl-Methylester oder ein Palmöl-Methylester ist.

5. Dieselkraftstoff nach einem der vorangegangenen Ansprüche, **dadurch gekennzeichnet, dass** Ethanol in einer Menge von 65 bis 80 Volumen-%, vorzugsweise in einer Menge von 70 bis 80 Volumen-%, vorliegt.

## Claims

1. A diesel fuel based on ethanol, comprising 60 to 80% by volume ethanol, 2.5 to 15% by volume of a linear dialkyl ether with a chain length including the oxygen atom of 10 to 40 as well as mixtures thereof, and 15 to 25% by volume combustion accelerator, wherein the combustion accelerator is a FAME to DIN EN 14214 (2004).

2. A diesel fuel according to claim 1, **characterised in that** the linear dialkyl ether is present in a quantity of up to 10% by volume, preferably in a quantity of up to 5% by volume.

3. A diesel fuel according to any one of the preceding claims, **characterised in that** the combustion accelerator is present in a quantity of 1 5 to 20% by volume.

4. A diesel fuel according to claim 3, **characterised in that** the FAME to DIN EN 14214 (2004) is a rapeseed oil methyl ester, a soya oil methyl ester or a palm oil methyl ester.

5. A diesel fuel according to any one of the preceding claims, **characterised in that** ethanol is present in a quantity of 65 to 80% by volume, preferably in a quantity of 70 to 80% by volume.

## Revendications

1. Carburant diesel à base d'éthanol, comprenant 60 à 80 % en volume d'éthanol, 2,5 à 15 % en volume d'un éther dialkylique linéaire avec une longueur de chaîne comprenant l'atome d'oxygène de 10 à 40 et leurs mélanges, et 15 à 25 % en volume d'accélérateur de combustion, l'accélérateur de combustion étant un FAME (EMAG) selon la norme DIN EN 14214 (2004).

2. Carburant diesel selon la revendication 1, **caractérisé en ce que** l'éther dialkylique linéaire est présent en une quantité allant jusqu'à 10 % en volume, de préférence en une quantité allant jusqu'à 5 % en volume.

3. Carburant diesel selon l'une quelconque des revendications précédentes, **caractérisé en ce que** l'accélérateur de combustion est présent en une quantité allant de 15 à 20 % en volume.

4. Carburant diesel selon la revendication 3, **caractérisé en ce que** le FAME selon la norme DIN EN 14214 (2004) est un ester méthylique d'huile de colza, un ester méthylique d'huile de soja ou un ester méthylique d'huile de palme.

5. Carburant diesel selon l'une quelconque des revendications précédentes, **caractérisé en ce que** l'éthanol est présent en une quantité allant de 65 à 80 % en volume, de préférence en une quantité allant de 70 à 80 % en volume.
